(19) Europäisches Patentamt
European Patent Office
Office européen des brevets

(11) Veröffentlichungsnummer: **0 492 245 A2**

(12) # EUROPÄISCHE PATENTANMELDUNG

(21) Anmeldenummer: **91121062.3**

(22) Anmeldetag: **09.12.91**

(51) Int. Cl.5: **C08L 77/00**, //C08G18:42, (C08L77/00,75:04,61:06)

(30) Priorität: **20.12.90 DE 4040852**

(43) Veröffentlichungstag der Anmeldung: **01.07.92 Patentblatt 92/27**

(84) Benannte Vertragsstaaten: **DE FR GB IT**

(71) Anmelder: **BAYER AG**

**W-5090 Leverkusen 1 Bayerwerk(DE)**

(72) Erfinder: **Heinz, Hans-Detlef, Dr.**
**Breslauer Strasse 31**
**W-4150 Krefeld 11(DE)**
Erfinder: **Stahlke, Kurt-Reiner, Dr.**
**Amselweg 20**
**W-5061 Kürten 2(DE)**
Erfinder: **Orthmann, Ernst, Dr.**
**Moltkestrasse 13**
**W-4047 Dormagen(DE)**

(54) **Thermoplastische Formmassen.**

(57) Die Erfindung betrifft ternäre Formmassen auf Basis von Polyamiden, thermoplastischen Polyurethanen und Polyphenolen.

Die Erfindung betrifft ternäre Formmassen auf Basis von Polyamiden, thermoplastischen Polyurethanen und Polyphenolen.

Thermoplastische Polyurethanelastomere (TPU) sind seit langem bekannte Werkstoffe, welche durch einen blockartigen Aufbau aus Hart(Urethanblöcke)-Segmenten und Weich(Polyether-, Polyester-, Poly-(ether)carbonatblöcke)-Segmenten gekennzeichnet sind. Ihr attraktives Eigenschaftsprofil hat ihnen ein breites Einsatzfeld eröffnet.

Auch Polyamide (z.B. PA6, PA66 etc.) sind seit langem bekannte Werkstoffe, welche industriell in großem Umfang hergestellt werden.

Es ist bekannt, thermoplastische Polyamide mit vergleichsweise geringen Mengen spezieller (gegebenenfalls thermoplastischer) Polyurethane abzumischen, beispielsweise zur Erhöhung der Zähigkeit bzw. Flexibilität (s. z.B. FR 2 207 953, DE 3 333 723, JA 61 025 820, DOS 2 931 689, DOS 2 544 252, EP 0 109 342) oder auch zur Erzielung eines verbesserten antistatischen Verhaltens (s. z.B. US 3 882 190, 3 876 725, DOS 2 315 681, DOS 2 411 715, JA 42135/72) oder auch zur Erhöhung der Schmelzviskosität von Polyamiden (z.B. JA 47-34798).

Polyphenol-haltige Formmassen sind beispielsweise in EP 0 240 887, 0 224 847, DOS 3 610 595, UDSSR 687 088 sowie der eigenen, bislang unveröffentlichten Patentanmeldung P4027402.0 beschrieben.

Mischungen aus Polyamiden und thermoplastischen Polyurethanen weisen den Nachteil auf, daß es bei den notwendigen hohen Verarbeitungstemperaturen häufig zu einem Viskositätsanstieg (Vernetzung des PA durch das TPU) kommt.

Es wurde nun überraschend gefunden, daß durch Zusatz spezieller Polyphenole zu TPU/PA-Legierungen dieser Viskositätsaufbau zumindest weitgehend vermieden werden kann. Im Vergleich zu den phenolhaltigen Polyamiden sind Zähigkeit sowie gegebenenfalls, völlig überraschend, auch die Farbe verbessert. Diese Effekte sind unerwartet und nicht aus dem Stand der Technik ableitbar. Die resultierenden Formmassen weisen ein ausgewogenes Eigenschaftsbild auf.

Gegenstand der Erfindung sind daher Formmassen, enthaltend

1) 0,1 - 99,8 Gew.-% an und für sich bekannter thermoplastischer Polyamide (vorzugsweise 0,5 - 99,5 Gew.-%)

2) mindestens 0,1 Gew.-%, vorzugsweise 0,1 - 99,8 Gew.-% thermoplastischer Polyurethane, (insbesondere 99,5 - 0,5 Gew.-%)

3) 0,1 - 30 Gew.-% Polyphenole der allgemeinen Formel (I), (vorzugsweise 1 - 15 Gew.-%)

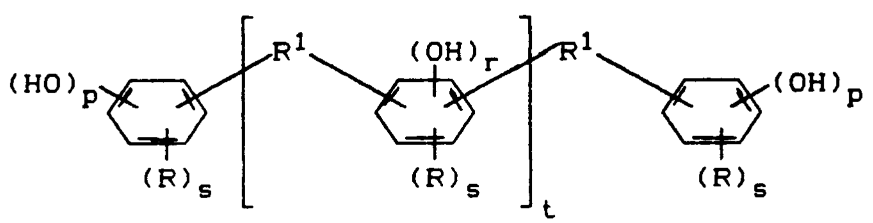 (I)

wobei bedeuten:

R unabhängig voneinander Wasserstoff (H), $C_1$-$C_{20}$-(Ar)Alkyl oder (Ar)alkyloxy, $C_6$-$C_{18}$-(Alk)Aryl oder (Alk)aryloxy, bevorzugt H und/oder $C_1$-$C_5$-Alkyl und/oder Phenyl,

$R^1$ unabhängig voneinander eine chemische Bindung, einen $C_1$-$C_{20}$-Alkylen- oder (gegebenenfalls cyclischen) Alkyliden-Rest, eine Ester-, eine Amidgruppe, -O-, -SO-, $SO_2$, -S-, -CO-,

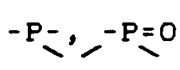

oder auch eine Anellierung zweier oder mehrerer Ringe, bevorzugt $C_1$-$C_{10}$-Alkylen oder (Cyclo)Alkyliden, -$SO_2$-, -S- oder eine chemische Bindung,

p 1 oder 2, bevorzugt 1,

r für die Zahlen 0, 1 oder 2, bevorzugt 1,

s für die Zahlen 0, 1 oder 2, bevorzugt 0 oder 1,

t Zahlen von 0 bis 15 (Mittelwert), bevorzugt 0 bis 10,

mit der Maßgabe, daß kein zu einer phenolischen OH-Gruppe ortho-ständiger Rest R eine tertiäre

Alkylgruppe sein soll,
und/oder polymerer Phenole, wobei die Summe von 1) bis
3) immer 100 % ergeben soll,
sowie zusätzlich
4) 0 - 200 Gew.-%, bevorzugt 0,01 bis 100 Gew.-%, bezogen auf 1) bis 3), üblicher Zusatzstoffe.

Gegenstand der Erfindung sind auch Formmassen, wie sie durch Vermischen der obengenannten Komponenten in der Schmelze entstehen.

Gegenstand der Erfindung ist auch ein Verfahren zur Herstellung dieser Formmassen sowie ihre Verwendung zur Herstellung von Formkörpern, Folien, Fasern und anderen Gegenständen.

Polyamide (1)

Polyamide 1), welche erfindungsgemäß eingesetzt werden können, umfassen teilkristalline und amorphe Polyamide. Geeignet sind beispielsweise PA6, 66, 46, 610, 122, 11, 12, 6T6, 6/T6, 6I6, 6/66-Copolyamide und andere mehr. Diese Polyamide sind bekannt oder können nach bekannten Verfahren hergestellt werden.

Bevorzugte Polyamide 1) sind PA6, 66 sowie Copolyamide auf Basis PA6 bzw. 66 und Mischungen aus den genannten Polyamiden.

Thermoplastische Polyurethane (TPU) - 2)

Thermoplastische Polyurethane 2) sind bekannt (siehe z.B. J.H. Saunders, K.C. Frisch; Polyurethanes Part I, High Polymer Series XVI, Interscience Publishers, New York, 1962).

Geeignete Isocyanate zu ihrer Herstellung sind beispielsweise (cyclo)aliphatische Diisocyanate wie Hexamethylendiisocyanat, Isophorondiisocyanat, 1,4-Cyclohexandiisocyanat, 4,4'-Dicyclohexylmethandiisocyanat und 1-Methyl-2,4- bzw. -2,6-cyclohexandiisocyanat (bzw. Gemische dieser beiden) sowie aromatische Diisocyanate wie 4,4'-Diphenylmethandiisocyanat (bzw. Isomerengemische verschiedener Diphenylmethandiisocyanate), Toluylen-2,4-bzw. -2,6-diisocyanat (bzw. Gemische dieser beiden), 1,5-Naphthylendiisocyanat und 1,4-Phenylendiisocyanat.

Bevorzugt sind 4,4'-Diphenylmethandiisocyanat (bzw. Gemische mit den 2,4'-Isomeren), Isophorondiisocyanat, Hexamethylendiisocyanat, 2,4- bzw. 2,6-Toluylendiisocyanat (bzw. Gemische dieser), 1,5-Naphthylendiisocyanat und 4,4'-Dicyclohexylmethandiisocyanat. Besonders bevorzugt ist Diphenylmethandiisocyanat mit einem Gehalt des 4,4'-Isomeren von mindestens 95 %.

Als Kettenverlängerer sind (gegebenenfalls im Gemisch) beispielsweise geeignet: Aliphatische Diole wie beispielsweise 1,4-Butandiol, 1,6-Hexandiol, 1,2-Ethylenglykol, Diethylenglykol, Triethylenglykol sowie u.U. auch Diamine wie Ethylendiamin, Hexamethylendiamin, Diaminodiphenylmethane, Toluylendiamine u.a.m.. Diamine als alleinige Kettenverlängerer sind im allgemeinen nicht geeignet, da die resultierenden Polyharnstoffe üblicherweise nicht thermoplastisch verarbeitbar sind.

Bevorzugte Kettenverlängerer sind Alkandiole mit 2 bis 6 C-Atomen, insbesondere Butandiol-1,4.

Die TPU 2) sollen, wenn überhaupt, nur so viele Harnstoffgruppen enthalten, daß die thermoplastische Verarbeitung möglich ist. Bevorzugt enthalten sie weniger als 20 Mol-% Harnstoffgruppen (bezogen auf Urethangruppen); besonders bevorzugt enthalten die TPU 2) weniger als 5 % Harnstoffgruppen.

Als Weichsegmente sind die bekannten Polyesterdiole, Poly(ether)carbonatediole und Polyetherdiole geeignet.

Bevorzugte Weichsegmente der TPU resultieren aus den hydroxylgruppenhaltigen höhermolekularen Verbindungen, z.B. Polyesterdiolen aus geradkettigen oder verzweigten aliphatischen und/oder cycloaliphatischen Diolen und aliphatischen Dicarbonsäuren, insbesondere Adipinsäure. Sie können jedoch auch untergeordnete Mengen an aromatischen Dicarbonsäuren, insbesondere Phthalsäure und gegebenenfalls auch Terephthalsäure sowie deren Hydrierungsprodukte enthalten. Ferner sind geeignet Hydroxypoly(ether)carbonate, Hydroxypolycaprolactone oder auch Hydroxypolyetherdiole auf Basis Ethylenoxid, Propylenoxid, Tetrahydrofuran oder Mischpolyether aus Propylenoxid und/oder Ethylenoxid und/oder Tetrahydrofuran.

Auch mit Vinylmonomeren, z.B. Styrol und Acrylnitril, gepfropfte Weichsegmente, z.B. Polyetherpolyole, sind geeignet.

Die Weichsegmente haben üblicherweise Molekulargewichte ($\overline{M}n$) im Bereich von einige Hundert (z.B. 200-300) bis etwa 6000, bevorzugt 500 bis 3500. Sie können gegebenenfalls auch weitere Hydroxyl- oder Aminendgruppen tragen.

Es können die dem Fachmann bekannten monofunktionellen Verbindungen in untergeordneten Anteilen,

z.B. von 0,01 bis 3 Gew.-%, bezogen auf PU-Feststoff, als sog. Kettenabbrecher mitverwendet werden. Beispiele sind Monoalkohole wie Butanol, 2-Ethylenhexanol, Isobutylalkohol, Octanol-1, Stearylalkohol oder Monoamine wie Anilin, Dibutylamin, N-Methylstearylamin oder Piperidin.

Katalysatoren für die Herstellung und Verfahren zur Herstellung der TPU 2), z.B. das Bandverfahren und das Extruderverfahren, sind bekannt.

Bevorzugte TPU 2) sind aus 4,4'-Diphenylmethandiisocyanat (Gehalt ≧95 %), 1,4-Butandiol und Polyester- bzw. Poly(ether)carbonat-Weichsegmenten (bzw. Weichsegmentmischungen) aufgebaut. Sie werden besonders bevorzugt nach dem Extruder-/Reaktionsschneckenverfahren hergestellt.

Bevorzugte TPU 2) weisen ein Molverhältnis von Kettenverlängerer zu Weichsegment von mind. 1,5:1, besonders bevorzugt mind. 2:1, auf.

Polyphenole (3)

Die phenolischen Verbindungen 3) der Formel (I) sind prinzipiell bekannt oder können nach prinzipiell bekannten Verfahren hergestellt werden.

Beispiele für Verbindungen der Formel (I) sind Alkylidenbisphenole wie 2,2-(Bis-4-hydroxyphenyl)-propan, Bis-(4-hydroxyphenyl)-methan, 1,1-(Bis-4-hydroxyphenyl)-cyclohexan, 1,1-(Bis-4-hydroxyphenyl)-ethan, 1,2-Bis-(4-hydroxyphenyl)-ethan, 2,2-(Bis-4-hydroxy-3,5-dimethyl-phenyl)-propan, 1,1-(Bis-4-hydroxyphenyl)-3,3,5-trimethylcyclohexan, Phenol- bzw. Alkylphenol-Formaldehyd-Kondensate (Novolake) mit im Mittel bevorzugt 3 bis 10 Ringen pro Molekül, 4,4'-Dihydroxydiphenylsulfon.

Bevorzugte Phenole 3) sind 2,2-Bis-(4-hydroxyphenyl)-propan, Bis-(4-hydroxyphenyl)methan, 1,1-Bis-(4-hydroxyphenyl)-3,3,5-trimethylcyclohexan, 4,4'-Dihydroxydiphenylsulfon und Novolake der Formel (II)

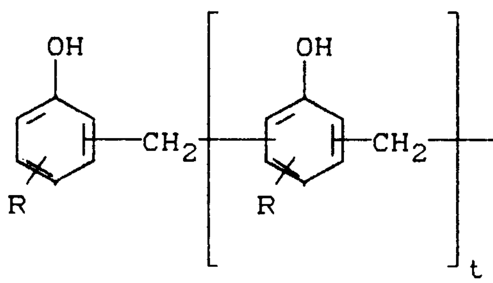

(II),

wobei

- R Wasserstoff und/oder einen $C_{1-5}$-Alkylrest und/oder einen Phenylrest, besonders bevorzugt Wasserstoff, und
- t eine Zahl (Mittelwert) von 1 bis 10 bedeuten,

so daß das Molekulargewicht ($\overline{M}n$) der Novolake von etwa 300 bis 1500 beträgt. Sie können auch verzweigt sein, d.h., mehr als zwei $-CH_2$-Gruppen pro Kern tragen.

Die Phenole 3) können einzeln oder in einem beliebigen Gemisch (auch Isomerengemische) eingesetzt werden. Sie sind bekannte Verbindungen oder können nach prinzipiell bekannten Verfahren hergestellt werden.

Polymere Phenole 3) sind insbesondere die Homo- und Copolymeren des 4-Vinylphenols bzw. des 4-Isopropenylphenols. Geeignete Comonomere sind z.B. Styrol, Methylmethacrylat und Hydroxyethylmethacrylat. Bevorzugt sind Poly-4-vinylphenol und seine Copolymeren mit max. 60 Gew.-% Comonomeren.

Die Herstellung der erfindungsgemäßen Formmassen erfolgt durch Vermischen in der Schmelze, bevorzugt in Knetern und Extrudern, wobei gegebenenfalls Konzentrate eingesetzt werden können und die Vermischung in einem oder mehreren Schritten erfolgen kann. Auch eine Vermischung der Komponenten in einer Spritzgußmaschine ist möglich.

Die Komponenten 1) und 2) sind, bezogen auf 1) + 2), bevorzugt zu 0,5 - 99,5 bzw. 99,5 - 0,5 Gew.-Teilen enthalten. Besonders bevorzugt sind Mischungen aus 40 - 99,0 Gew.-% 1) und 1,0 - 60 Gew.-% 2) bzw. 60 - 99,5 Gew.-% 2) und 0,5 - 40 Gew.-% 1). Ganz besonders bevorzugt sind Mischungsverhältnisse von 90 - 99 Gew.-% Polyamiden 1) und 1 - 10 Gew.-% TPU 2).

Die Polyphenole 3) sind bevorzugt in Mengen von 0,1 - 30 Gew.-%, besonders bevorzugt 1 - 15 Gew.-% in der Mischung 1) - 3) enthalten.

Übliche Zusatzstoffe (4)

Als Zusatzstoffe 4) kommen insbesondere Antistatika, Stabilisatoren, Flammschutzmittel, Füllstoffe, Glasfasern und andere Verstärkungsmittel bzw. Füllstoffe, Farbstoffe, Pigmente, polymere Legierungspartner, Gleit- bzw. Entformungsmittel und Nukleierungsmittel in Frage. Auch Trennmittel sowohl äußerliche wie auch eingebaute Trennmittel können anwesend sein.

Als polymere Legierungspartner kommen bevorzugt die bekannten Schlagzähmodifikatoren sowie amorphe Thermoplaste wie ABS, ASA, Polycarbonate usw. in Frage.

Die Herstellung der erfindungsgemäßen Formmassen erfolgt vorzugsweise durch Mischen der Komponenten in der Schmelze, gegebenenfalls nach Vorvermischung bzw. in mehreren Schritten, als reine Stoffe oder Konzentrate.

Die Mischungen der Erfindung (Komponenten 1) - 3)) enthalten bevorzugt einerseits 60 - 98 Gew.-% Polyamide 1), 1 - 15 Gew.-% TPU 2) und 1 - 25 Gew.-% Phenole 3) sowie andererseits 80 -98,5 Gew.-% TPU 2), 0,5 -10 Gew.-% Polyamide 1) und 1 - 10 Gew.-% Phenole 3).

Ganz besonders bevorzugt enthalten sie einerseits 78 - 96 Gew.-% Polyamide 1), 1 - 10 Gew.-% TPU 2) und 3 - 15 Gew.-% Phenole 3) und andererseits 85 - 97 Gew.-% TPU 2), 1 - 5 Gew.-% Polyamide 1) und 2 - 10 Gew.-% Phenole 3).

Im Falle der TPU 2)-reichen Legierungen sind Polyamide mit einem Schmelzpunkt (nach Fischer-Johns; ASTM D-789) von 190 - 250 °C bevorzugt, insbesondere PA6.

Die Zusatzstoffe 4) sind bevorzugt in Mengen von 0,01-100 Gew.-%, bezogen auf 1) - 3), anwesend.

Die erfindungsgemäßen Mischungen zeigen völlig überraschenderweise gegenüber Polyphenol-freien Formmassen einen stark verringerten oder gar keinen Molgewichtsaufbau bei der Herstellung (gemessen anhand der relativen Lösungsviskosität) und von daher eine erheblich verbesserte Fließfähigkeit und Verarbeitbarkeit. Auch die Wasseraufnahme ist verringert.

Gegenüber den TPU-freien Mischungen sind bei vergleichbarer Steifigkeit und Festigkeit die Zähigkeitswerte deutlich erhöht; dazu ist häufig auch, insbesondere in verstärkten/gefüllten Einstellungen, die Farbe verbessert (heller). Die zur Erzielung eines optimalen, ausgewogenen Eigenschaftsbildes notwendigen Mengen an TPU (Phenol) betragen typischerweise 1 - 7 Gew.-% (TPU; je nach Art des Compounds) bzw. 5 - 15 Gew.-% (Phenol).

Diese Befunde sind völlig überraschend und nicht vorhersehbar gewesen. Die erfindungsgemäßen Formmassen sind von ihrem Eigenschaftsbild her eine sehr wertvolle Ergänzung des Standes der Technik. Sie eignen sich zur Herstellung von Formkörpern, Folien, Fasern, Verbundwerkstoffen (Composites)-/Halbzeugen und anderen Gegenständen nach beispielsweise Verfahren des Spritzgießens, der Extrusion, der Pultrusion, des "film-stacking" und anderen mehr. Diese Formkörper, Folien, Fasern, Verbundwerkstoffe (Composites)/Halbzeuge usw. sind ebenfalls Gegenstand der Erfindung.

Die Erfindung wird durch die noch folgenden Beispiele erläutert, ohne sie darauf einzuschränken. Es werden typische Komponenten in typischen Mengen eingesetzt.

## Beispiele

In den folgenden Beispielen bedeuten:

| | |
|---|---|
| TPU-1: | Polyesterurethanelastomer, aufgebaut aus 100 Gew.-Teilen eines Adipinsäure-Butandiol-Polyesters ($\overline{M}n$ = 2.250 g/mol), 10,5 Gew.-Teilen Butandiol-1,4 und 40 Gew.-Teilen 4,4'-Diphenylmethandiisocyanat. |
| Phenol a: | 2,2-(Bis-4-hydroxyphenyl)-propan |
| Phenol b: | Phenol-Formaldehyd-Novolak (Phenol:$CH_2O$ ≃ 1:0,78) |

## Beispiele 1 und 2

85 Gew.-% Polyamid 6 ($\eta_{rel}$ (1 % in m-Kresol, 25 °C) ≃ 2,9), 5 Gew.-% TPU-1 und je 10 Gew.-% Phenol a bzw. Phenol b wurden trocken vermischt und bei einem Durchsatz von 12 kg/h über einen ZSK-30 Doppelwellenextruder extrudiert.

Drehmonentwerte des Extruder sowie $\eta_{rel}$-Werte (s.o.) sind in Tabelle 1 enthalten.

## Vergleichsbeispiel 1

In derselben Weise wurde das PA6/TPU-Gemisch extrudiert. Die Daten sind ebenfalls in Tabelle 1 enthalten.

Tabelle 1

| Bsp. | Phenol | Menge (%) | PA (%) | TPU (%) | D(T)[1)] | $\eta$rel[2)] GR | PK |
|---|---|---|---|---|---|---|---|
| 1 | a | 10 | 85 | 5 | 36/278 | 3,08 | 3,03 |
| 2 | b | 10 | 85 | 5 | 34/276 | 2,61 | 2,69 |
| Vergl.1 | - | - | 95 | 5 | 52/282 | 4,11 | 3,99 |

[1)] D bedeutet das Drehmoment des Extruders während der Compoundierung in (%); es ist ein Maß für die Fließfähigkeit. Je geringer das Drehmoment ist, desto besser ist die Fließfähigkeit. T bedeutet dabei die Extrudertemperatur in (° C).
[2)] 1 % in m-Kresol bei 25° C; GR = Granulat, PK = Probekörper

Beispiel 3

In der für die Beispiele 1 und 2 beschriebenen Weise wurde ein 30 % glasfaserverstärktes, elastomermodifiziertes PA6, das zusätzlich noch 10 % (bezogen auf PA6-Anteil) Phenol a und 5 % TPU-1 (bezogen auf Compound) enthielt, hergestellt.

Drehmomentwerte des Extruders sowie $\eta_{rel}$-Werte sind in Tabelle 2 enthalten.

Tabelle 3 zeigt einige mechanische Kenngrößen sowie Daten für die Wasseraufnahme des Compounds.

Veraleichsbeispiel 2

In derselben weise wurde das gleiche PA-Compound ohne TPU-1 geprüft (Tabellen 2 und 3).

Tabelle 2

| Beispiel | TPU (%) | D/T | $\eta_{rel}$ GR | PK |
|---|---|---|---|---|
| 3 | 5 | 46/282 | 2,75 | 2,58 |
| Vergl. 2 | - | 46/280 | 2,67 | 2,44 |

Man erkennt, daß durch Zugabe des TPU kein signifikanter Molmassenaufbau erfolgt.

Die Farbe des Produkt nach Beispiel 3 war sowohl im Strang als auch im Spritzgußkörper erheblich heller als die des Vergleichs.

Tabelle 3

| Eigenschaft | Beispiel 3 | Vergleich 2 |
|---|---|---|
| $a_k$ ($kJm^2$ ) | 17,6 | 12,5 |
| $E_B$ (MPa) | 7576 | 7999 |
| $\sigma_B$ (MPa) | 213 | 215 |
| $D_bB$ (%) | 5,7 | 4,6 |
| $H_2O$-Aufnahme (%) (60° C) nach 15 d | 4,4 | 4,5 |

Beispiele 4 - 7

Mit Hilfe eines ZSK-30 Doppelwellenextruders (12 kg $h^{-1}$ Durchsatz) wurden Compounds auf Pasis PA6 ($\eta_{rel}$ ≃ 2,9) TPU-1) und Phenol b, welche 30 Gew.-% Glasfasern enthielten, hergestellt.

Die Zusammensetzung der Proben ist in Tabelle 4 zusammengestellt.

Vergleichsbeispiel 3

In derselben Weise wurde ein Compound ohne TPU-1 hergestellt (Tabelle 4).

Beispiele 8 und 9

In der für die Beispiele 4 - 7 beschriebenen Weise wurden entsprechende Compounds enthaltend Phenol b und 30 Gew.-% mineralischen Füllstoffs hergestellt (Tabelle 4).

Vergleichsbeispiel 4

In derselben Weise wurde ein Compound ohne TPU-1 hergestellt (Tabelle 4).

**Tabelle 4**

| Beispiel | 4 | 5 | 6 | 7 | Vgl. 3 | 8 | 9 | Vgl. 4 |
|---|---|---|---|---|---|---|---|---|
| Phenol [%] | 7 | 7 | 7 | 7 | 7 | 7 | 7 | 7 |
| PA6 [%] | 61,5 | 58,4 | 55,3 | 50,7 | 63 | 61,5 | 58,4 | 63 |
| TPU-1 [%] | 1,5 | 4,6 | 7,7 | 12,3 | - | 1,5 | 4,6 | - |
| Glasfaser [%] | 30 | 30 | 30 | 30 | 30 | - | - | - |
| Füllstoff [%] | - | - | - | - | - | 30 | 30 | 30 |
| Biegespannung 3,5 RFD [MPa] | 230 | 217 | 201 | 196 | 244 | 142 | 133 | 145 |
| Biegespannung bei Höchstkraft [MPa] | 240 | 226 | 211 | 202 | 253 | 149 | 139 | 152 |
| Randfaserdehnung bei Höchstkraft [%] | 4,1 | 4,2 | 4,4 | 4,0 | 4,0 | 4,7 | 4,7 | 4,8 |
| Biegefestigkeit [MPa] | 239 | 225 | 210 | 200 | 252 | - | - | - |
| Randfaserdehnung [%] | 4,3 | 4,4 | 4,6 | 4,2 | 4,1 | - | - | - |
| Biege-E-Modul [MPa] | 8100 | 7680 | 7200 | 7000 | 8320 | 5030 | 4860 | 5120 |
| Izod an RT [1)] | 57,0 | 57,0 | 53,3 | 46,1 | 41,9 | 73,9 | 58,7 | 57,0 |
| Izod an -30°C [1)] | 46,4 | 53,1 | 45,2 | 35,4 | 40,5 | 46,2 | 40,8 | 34,7 |
| Izod $a_k$ RT [2)] | 13,4 | 16,0 | 15,5 | 13,7 | 10,6 | 6,6 | 6,6 | 6,3 |
| Farbe (optisch) | braun | beige | hell-beige | hell-beige | braun | - | - | - |

1) ISO 180, Methode 1 C
2) ISO 180, Methode 1 A

Im Fall der Beispiele 4 - 7 wurde mit steigender Menge an TPU-1 eine deutliche Farbaufhellung beobachtet.

**Patentansprüche**

**1.** Thermoplastische Formmassen, enthaltend

1) 0,1 - 99,8 Gew.-% an und für sich bekannter thermoplastischer Polyamide

2) 0,1 - 99,8 Gew.-% thermoplastischer Polyurethane,

3) 0,1 - 30 Gew.-% Polyphenole der allgemeinen Formel (I),

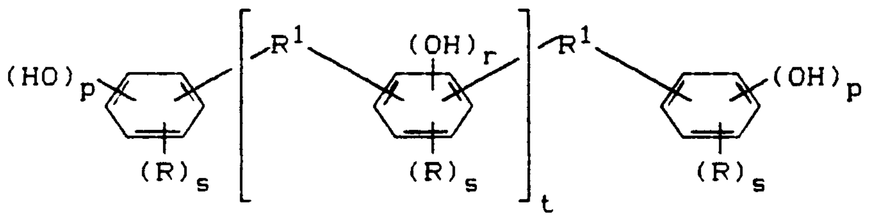 (I)

wobei bedeuten:

R unabhängig voneinander Wasserstoff (H), $C_1$-$C_{20}$-(Ar)Alkyl oder⁻(Ar)alkyloxy, $C_6$-$C_{18}$-(Alk)-Aryloder-(Al(1)aryloxy, bevorzugt H und/oder $C_1$-$C_5$-Alkyl und/oder Phenyl,

$R^1$ unabhängig voneinander eine chemische Bindung, einen $C_1$-$C_{20}$-Alkylen- oder (gegebenenfalls cyclischen) Alkyliden-Rest, eine Ester-, eine Amidgruppe, -O-, -SO-, $SO_2$-, -S-, -CO-,

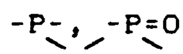

oder auch eine Anellierung zweier oder mehrerer Ringe, bevorzugt $C_1$-$C_{10}$-Alkylen oder (Cyclo)Alkyliden, -$SO_2$-, -S- oder eine chemische Bindung,

p 1 oder 2, bevorzugt 1,

r für die Zahlen 0, 1 oder 2, bevorzugt 1,

s für die Zahlen 0, 1 oder 2, bevorzugt 0 oder 1,

t Zahlen von 0 bis 15 (Mittelwert), bevorzugt 0 bis 10,

mit der Maßgabe, daß kein zu einer phenolischen OH-Gruppe ortho-ständiger Rest R eine tertiäre Alkylgruppe sein soll,

und/oder polymerisierter Phenole, wobei die Summe von A) bis C) immer 100 % ergeben soll,

sowie zusätzlich

4) 0 - 200 Gew.-%, bevorzugt 0,01 bis 100 Gew.-%, bezogen auf 1) bis 3), üblicher Zusatzstoffe.

**2.** Formmassen nach Anspruch 1, dadurch gekennzeichnet, daß als Phenole 3) 2,2-Bis-(4-hydroxyphenyl)-propan, Bis-(4-hydroxyphenl)-methan, 1,1-Bis-(4-hydroxyphenyl)-3,3,5-trimethylcyclohexan, 4,4'-Dihydroxydiphenylsulfon, Novolake der Formel (II)

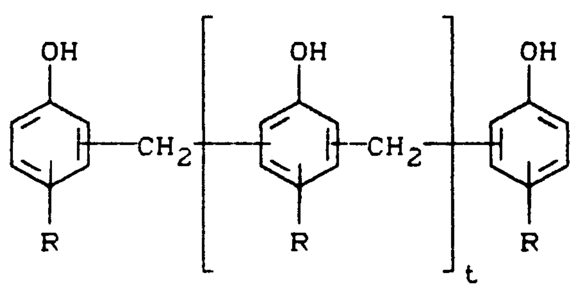 (II),

wobei

R Wasserstoff und/oder einen $C_{1-5}$-Alkylrest und/oder einen Phenylrest, bevorzugt Wasserstoff, und

t eine Zahl (Mittelwert) von 1 bis 10 bedeuten,

so daß das Molekulargewicht ($\overline{M}$n) der Novolake von etwa 300 bis etwa 1500 beträgt und wobei die Novolake auch verzweigt sein können, d.h., mehrere $CH_2$-Gruppen tragend sein können, sowie Poly-4-vinylphenol und seine Copolymeren mit maximal 60 Gew.-% Comonomeren bevorzugt sind.

**3.** Thermoplastische Formmassen nach wenigstens einem der vorhergehenden Ansprüche, dadurch gekennzeichnet, daß die Polyurethane 2) aus 4,4'-Diphenylmethandiisocyanat, $C_{2-6}$-Alkylenglykolen und Polyester- und/oder Poly(ether)carbonat-Weichsegmenten aufgebaut sind, wobei das Molverhältnis von Kettenverlängerer zum Weichsegement bevorzugt mind. 1,5:1 und besonders bevorzugt mind 2,0:1 beträgt.

**4.** Thermoplastische Formmassen nach mind. einem der vorhergehenden Ansprüche, dadurch gekennzeichnet, daß als Polyamide 1) bevorzugt PA6, 66 sowie Copolyamide auf Basis PA6 bzw. 66, gegebenenfalls in einem beliebigen Gemisch eingesetzt werden.

**5.** Formmassen nach mindestens einem der vorhergehenden Ansprüche, enthaltend (bezogen auf 1) - 3)) bevorzugt einerseits 60-98 Gew.-% Polyamide 1), 1 - 15 Gew.-% TPU 2) und 1-25 Gew.-% Phenole 3) sowie andererseits 80-98,5 Gew.-TPU 2), 0,5-10 Gew.-% Polyamide 1) und 1 - 10 Gew.-% Phenole 3) und besonders bevorzugt einerseits 78 - 96 Gew.-% Polyamide 1), 1-10 Gew.-% TPU 2) und 3-15 Gew.-% Phenole 3) und andererseits 85-97 Gew.-% TPU 2), 1-5 Gew.-% Polyamide 1) und 2-10 Gew.-% Phenole 3).

**6.** Formmassen nach mindestens einem der vorhergehenden Ansprüche, enthaltend als Zusatzstoffe 4) beispielsweise Füll/Verstärkungsstoffe, Stabilisatoren, Gleitmittel, Entformungsmittel, Nukleierungsmittel, Farbstoffe, Pigmente, polymere Legierungspartner, Flammschutzmittel und andere mehr.

**7.** Verfahren zur Herstellung der Formmassen gemäß wenigstens einem der vorhergehenden Ansprüche, dadurch gekennzeichnet, daß die Polyamide 1), die Polyurethane 2), die Phenole 3) sowie gegebenenfalls weitere Zusatzstoffe 4) in der Schmelze vermischt werden.

**8.** Verwendung der Formmassen gemäß wenigstens einem der vorhergehenden Ansprüche zur Herstellung von Formkörpern, Folien, Fasern, Verbundwerkstoffe und anderen Gegenständen.

**9.** Formkörper, Folien, Fasern, Verbundwerkstoffe (Composites) und andere Gegenstände aus Formmassen nach mindestens einem der vorhergehenden Ansprüche.

**10.** Verwendung von Polyphenolen 3) nach Ansprüchen 1 und 2 zur Verringerung bzw. Vermeidung eines Molgewichtsaufbaus in Legierungen aus Polyamiden 1) und thermoplastischen Polyurethanen 2).